Europäisches Patentamt

European Patent Office

Office européen des brevets

(11) Veröffentlichungsnummer: **0 156 765**
**A1**

## EUROPÄISCHE PATENTANMELDUNG

(21) Anmeldenummer: 85810060.5

(22) Anmeldetag: 18.02.85

(51) Int. Cl.⁴: **H 04 B 7/26**
**H 04 B 1/66**

(30) Priorität 07.03.84 CH 1128/84

(43) Veröffentlichungstag der Anmeldung:
02.10.85 Patentblatt 85/40

(84) Benannte Vertragsstaaten:
AT CH DE FR GB IT LI NL SE

(71) Anmelder: Autophon A.G.
Ziegelmattstrasse 1-15
CH-4500 Solothurn 3(CH)

(72) Erfinder: Müller, Hans-Rudolf
St. Josefsgasse 26
CH-4500 Solothurn(CH)

(74) Vertreter: Schweizer, Hans et al,
Bovard AG Patentanwälte VSP Optingenstrasse 16
CH-3000 Bern 25(CH)

(54) Funksystem zur von Sprachsignalen unabhängigen Übermittlung von Datensignalen von mehreren Unterstationen nach einer Hauptstation.

(57) Bei diesem Funksystem mit einer Hauptstation (1) und mehreren Unterstationen (7) wird von der Hauptstation dauernd ein Taktsignal ausgesendet, und die Unterstationen unterbrechen periodisch die Sendung von Sprachsignalen in Abhängigkeit von diesem Taktsignal. Jeder Unterbruch erlaubt einer beliebigen Unterstation, während dieser Zeit Daten nach der Hauptstation zu senden.

Fig.1

EP 0 156 765 A1

Croydon Printing Company Ltd.

- 1 -

Funksystem zur von Sprachsignalen unabhängigen Uebermittlung von Datensignalen von mehreren Unterstationen nach einer Hauptstation

Es besteht, insbesondere bei Bahnfunkanlagen, das Bedürfnis, zwischen einer festen Funkstation und einer von mehreren beweglichen Funkstationen neben Gesprächen auch technische Daten von den beweglichen Stationen nach der Hauptstation zu übermitteln, wobei diese Daten-Uebermittlung auch während eines Gespräches und sowohl von der Station aus, an welcher gerade gesprochen wird, als auch von einer andern aus möglich sein soll. Dabei werden vorzugsweise Halb- oder Voll-Duplex-Anlagen verwendet, d.h. Anlagen mit je einer Frequenz für die beiden Verkehrsrichtungen, bei denen an den beweglichen Stationen im Ruhezustand der Sender ausgeschaltet ist und von Hand getastet, d.h. zum Senden veranlasst werden muss.

Aus der deutschen Patentschrift 23 40 136 ist ein Funkübertragungssystem bekannt geworden, welches mit Wechselsprechen auf einer einzigen Frequenz betrieben wird, in welchem bekanntlich die Stationen in bezug auf Rangordnung einander gleichgestellt sind und einen Verkehr je zwischen zwei beliebigen Stationen erlauben. In jenem bekannten System werden neben Sprachsignalen auch Daten übertragen. Dabei wird von jeder sendenden Station während jeder Sendung periodisch kurzzeitig auf Empfang umgeschaltet, und in den auf diese Weise entstehenden

- 2 -

Zeitschlitzen können von der an der betreffenden Verbindung beteiligten Gegenstation Daten in der Gegenrichtung übertragen werden. Die dort übermittelten Daten werden immer zwischen zwei miteinander in Verbindung stehenden Stationen ausgetauscht und beziehen sich immer auf die betreffende Verbindung, indem insbesondere die Anforderung der Umkehrung der Gesprächsrichtung, eine Synchronisierung von Kryptogeräten oder die Bekanntgabe des Empfangspegels übermittelt wird. Je zwei Stationen müssen sich dabei selber synchronisieren. Als Modulationsart für die Uebertragung der Sprache ist Puls-Delta-Modulation vorgesehen, was die Verwendung besonderer, nicht für die Uebertragung analoger Sprachsignale geeigneter Funkgeräte bedingt.

Die vorliegende Erfindung löst die eingangs beschriebene Aufgabe, die sich jedoch - im Gegensatz zum beschriebenen bekannten System - ausschliesslich auf Duplex-Anlagen bezieht, mit ähnlichen Mitteln wie sie in diesem bekannten System angewendet werden. Sie betrifft ein Funksystem für Halb- oder Voll-Duplex-Betrieb, mit mindestens einer Hauptstation und mehreren zwecks Uebermittlung von Sprachsignalen von Hand auf Senden steuerbaren (zu tastenden) Unterstationen, zur Uebermittlung von Datensignalen von den Unterstationen nach der Hauptstation. Dieses Funksystem dient auch zur unabhängig von der Uebermittlung von Datensignalen und damit gegebenenfalls gleichzeitig erfolgenden Uebermittlung von Sprachsignalen von einer der Unterstationen nach der Hauptstation und von der Hauptstation nach der betreffenden Unterstation. Die Erfindung ist durch die im kennzeichnenden Teil des Patentanspruchs 1 aufgeführten Merkmale gekennzeichnet.

- 3 -

Durch die Bildung von Zeitschlitzen geht, sofern nicht besondere Massnahmen getroffen werden, ein Teil der zu übertragenden Information verloren. Dieser Nachteil wächst mit zunehmender Breite der Schlitze. Es ist beispielsweise aus der deutschen Patentschrift 12 90 598 bekannt geworden, wie solche Nachteile behoben werden können. In jenem System werden in einen lückenlosen Impulsfluss Zeitschlitze eingefügt, während denen zusätzliche Signale übertragen werden, wobei der durch die Schlitze entstehende Verlust durch zeitliche Kompression am Sendeort und Expansion am Empfangsort ausgeglichen wird. Kompression und Expansion werden dort mit Hilfe von digitalen Schieberegistern erreicht. Eine Anordnung zur Kompression und Expansion analoger Signale mit Hilfe von Verzögerungsleitungen ist in der deutschen Patentschrift 5 49 855 beschrieben.

In einer besonderen Ausführungsform der Erfindung werden die Zeitschlitze ebenfalls durch Kompression und Expansion ausgeglichen, wobei das drahtlos übertragene Signal ein Analogsignal ist und daher von einem gewöhnlichen Sprechfunkgerät übertragen werden kann.

Weitere besondere Ausführungsformen der Erfindung sind den übrigen Ansprüchen zu entnehmen.

Die Erfindung wird nun anhand eines Ausführungsbeispiels erklärt.

Die Figur 1 stellt ein Blockschema eines Funksystems mit einer fernbedienten Hauptstation und drei Unterstationen dar.

Die Figur 2 zeigt das Blockschema der Hauptstation.

Die Figur 3 zeigt das Blockschema einer der Unterstationen.

- 4 -

Die Figur 4 zeigt den Aufbau von zwischen einer Unterstation und der Hauptstation übermittelten Signalen.

Die Figur 5 stellt den zeitlichen Verlauf der Speicherbelegung in einer Anordnung zur Kompression des Sprachsignals dar.

Die Figur 6 stellt den zeitlichen Verlauf der Speicherbelegung in einer Anordnung zur Expansion des Sprachsignals dar.

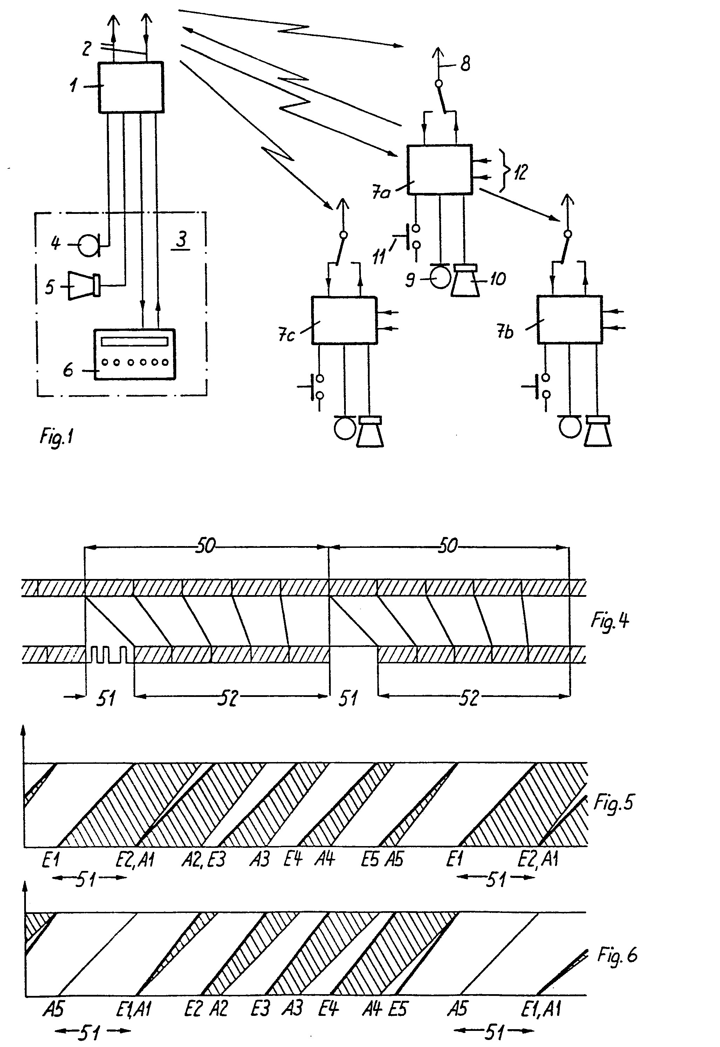

Die Figur 1 zeigt eine fernbediente Hauptstation 1, welche über die Antennen 2 gleichzeitig senden und empfangen kann. Anstelle von zwei Antennen könnte auch nur eine einzige Antenne angeordnet sein, wobei der Senderausgang und der Empfängereingang über eine Frequenzweiche an diese Antenne anzuschliessen wären. Eine von der Station 1 abgesetzte Sprechstelle 3 enthält ein Mikrofon 4, einen Lautsprecher 5 und ein Daten-Empfangs- und Verarbeitungsgerät 6. Zwischen der Sprechstelle 3 und der Hauptstation 1 können die Signale mit Draht (wie dargestellt) oder mit Richtfunk übertragen werden.

Die Unterstationen 7a, 7b und 7c weisen je eine einzige, auf Senden oder Empfangen umstellbare Antenne 8 auf. Die Station 7a ist dabei im Sende-, die beiden übrigen Unterstationen im Empfangszustand dargestellt. Die Stationen enthalten je ein Mikrofon 9, einen Lautsprecher 10, eine Sprechtaste 11 und einen Dateneingang 12.

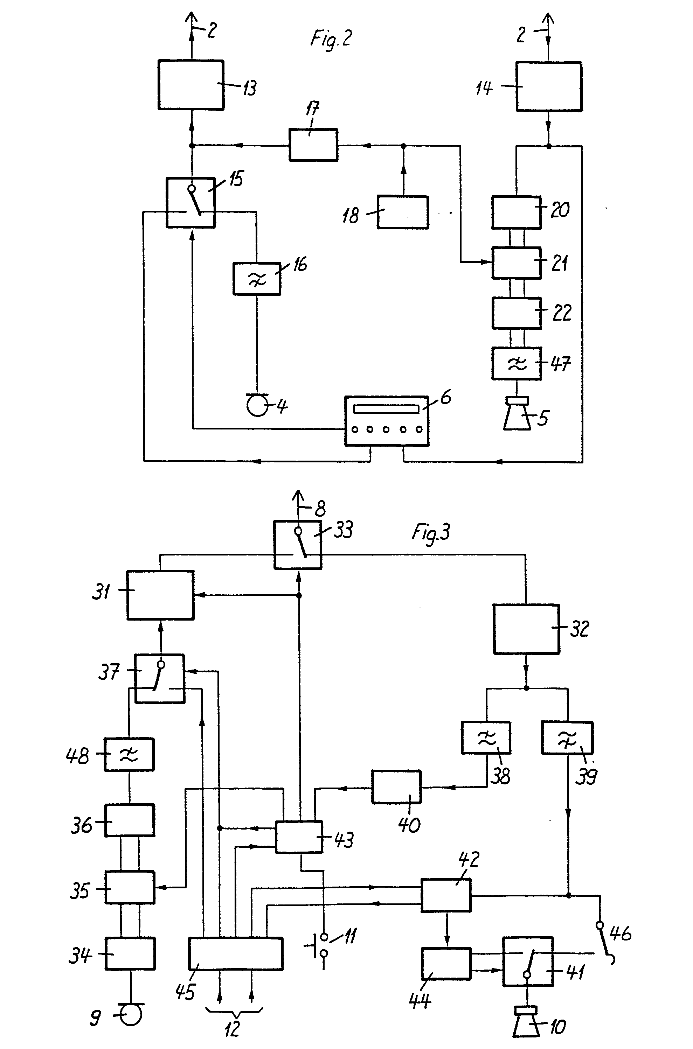

Die in Figur 2 dargestellte Hauptstation, welche vorzugsweise eine feste Station ist, weist einen Sender 13 und einen Empfänger 14 auf. Ein Umschalter 15 legt im Ruhezustand das Mikrofon 4 über einen Hochpass 16 an den Sendereingang. Dieser Hochpass hält die unter 200 Hz liegenden, in der Sprache enthaltenen Frequenzen zurück um ein in diesem Bereich

- 5 -

liegendes Synchronisiersignal nicht zu stören. Dieses Synchronisiersignal wird in einem von einem Taktgeber 18 gesteuerten Signalerzeuger 17 erzeugt und weist eine Ruhefrequenz von beispielsweise 100 Hz auf, die in Abständen von 1 s kurzzeitig beispielsweise auf 200 Hz springt. Dieses Signal wird dem über das Filter 16 eintreffenden Signal unterlagert.

Der Schalter 15 trennt bei seiner Betätigung den Sendereingang vom Mikrofon ab und legt ihn an den Ausgang des Datenverarbeitungs-Gerätes 6. Dieses Gerät liefert die zu übermittelnden Daten und steuert den Schalter 15.

Der Ausgang des Empfängers 14 ist einerseits an einen später erklärten, aus einem Analog-Digital-Wandler 20, einem Binärspeicher 21, einem Digital-Analog-Wandler 22 und einem Tiefpass-Filter 47 bestehenden zeitlichen Signal-Expander angelegt, dessen Ausgang an den Lautsprecher 5 führt. Anderseits ist das Datenverarbeitungsgerät 6 an den Empfänger-Ausgang angeschlossen.

Die in der Figur 3 dargestellte, vorzugsweise als bewegliche Station verwendete Unterstation weist einen Sender 31, einen Empfänger 32, einen zusammen mit dem Sender gesteuerten Antennen-Umschalter 33 und die Antenne 8 auf. Das Mikrofon 9 ist über einen aus einem Analog-Digital-Wandler 34, einem Binärspeicher 35, einem Digital-Analog-Wandler 36 und einem Tiefpass-Filter 48 bestehenden zeitlichen Signal-Kompressor und den Schalter 37 an den Sender-Eingang angeschlossen. Die Arbeitsweise dieses Kompressors wird später anhand der Figur 6 erklärt.

- 6 -

Am Ausgang des Empfängers 32 ist ein Tiefpassfilter 38 und ein Hochpassfilter 39 angeschlossen. Das Tiefpassfilter 38 führt das vom Signalerzeuger 17 (Fig. 2) abgegebene und drahtlos übertragene Unterlagerungssignal einem Auswerter 40 zu, welcher an seinem Ausgang Synchronisier-Impulse abgibt. Sofern ein Sprach- oder Datensignal empfangen wird, tritt es am Ausgang des Hochpassfilters 39 auf und wird von dort einerseits über den Lautsprecher-Schalter 46 und über einen Schalter 41 an den Lautsprecher 10 und anderseits an einen Daten-Auswerter 42 angelegt, wobei dieser Auswerter die vom Datenverarbeitungs-Gerät 6 (Fig. 2) abgegebenen und drahtlos übermittelten Daten auswertet und das Ergebnis - in Abhängigkeit vom Inhalt der Daten - entweder einem Daten-Zwischenspeicher 45 oder einem Anruf-Gerät 44 zuführt. Das Anruf-Gerät 44 erzeugt, sofern es vom Auswerter 42 eingeschaltet wird, ein Tonsignal und legt den Schalter 41 um, worauf der Lautsprecher 10 das Anrufsignal wiedergibt.

Dem Daten-Zwischenspeicher 45 werden über die Eingänge 12 sporadisch an die Hauptstation zu übermittelnde Daten zugeführt. Das Vorhandensein gespeicherter Daten wird einem Tastungs-Steuergerät 43 bekanntgemacht. Dieses Tastungs-Steuergerät 43 erhält weitere Steuersignale von der Sprechtaste 11 und dem Auswerter für das Synchronisiersignal 40. Ueber den einen seiner Ausgänge steuert es die Tastung des Senders 31 und den Antennen-Umschalter 33 und über einen zweiten den erwähnten Sprach-Kompressor, während es über einen dritten Ausgang die Aussendung der im Zwischenspeicher 45 vorhandenen Daten über den Sender veranlasst, indem einerseits dem Zwischenspeicher 45 ein Ausspeicherbefehl zugeleitet und anderseits der Umschalter 37 betätigt wird. Anlässlich einer solchen Ausspeicherung werden jedoch die im Zwischenspeicher

- 7 -

gespeicherten Daten noch nicht gelöscht; eine solche Löschung erfolgt in später erklärter Weise vom Daten- Auswerter 42 aus.

Anhand der Figuren 5 und 6 wird nun die Bearbeitung der Signale in den Verarbeitungsketten beschrieben, die je aus dem Analog-Digitalwandler 20 bzw. 34, dem Binärspeicher 21 bzw. 35 und dem Digital-Analogwandler 22 bzw. 36 bestehen. Die Analog-Digitalwandler 20 und 34 tasten das ihnen zugeführte Analogsignal mit einer Frequenz von 10 bzw. 8 kHz ab und wandeln die einzelnen Analogwerte je in ein 8-Bit-Parallel-Binärsignal um. Die Digital-Analogwandler 22 und 36 wandeln eine ihnen zugeführte Folge von parallelen Binärsignalen in ein Analogsignal zurück. Die Binärspeicher 21 und 35 haben eine Kapazität von 1600 x 8 Bits, was die Speicherung eines 200 ms langen Sprachsignals ermöglicht. Nicht dargestellte Ein- und Ausspeichereinrichtungen erlauben ein unabhängig voneinander ablaufendes Ein- und Ausspeichern, wobei, unter Voraussetzung einer bestimmten Reihenfolge der Speicherplätze, diese Vorgänge immer in der Richtung vom Anfang zum Ende ablaufen. Es wird mit verschiedenen Geschwindigkeiten ein- und ausgespeichert, wobei die Grundsätze angewendet werden, die in der Deutschen Patentschrift 19 49 322 festgehalten sind. Im vorliegenden Beispiel wird in den Speicher 35 mit 8 kBits/s eingespeichert und mit 10 kBits/s ausgespeichert, während beim Speicher 21 mit 10 kBits/s ein- und mit 8 kBits/s ausgespeichert wird.

Der zeitliche Ablauf der Speicherung im Speicher 35 ist in Figur 5 dargestellt. In der x-Achse ist dabei die Zeit t und in der y-Achse der Platz des Speichers, an welchem zur betreffenden Zeit ein- oder ausgespeichert wird, aufgetragen. Das Einspeichern ist dabei mit dicken, das Ausspeichern dagegen mit dünnen Linien angegeben, und die jeweilige Belegung der Speicherplätze ist schraffiert dargestellt. Das Einspeichern verläuft, beginnend zum Zeitpunkt E1, während 200 ms vom ersten zum letzten Speicherplatz und beginnt dann ohne Unterbruch jeweils zu den Zeitpunkten E2, E3, E4, E5 und E1 wiederum beim ersten Platz. Das Ausspeichern verläuft demgegenüber, beginnend zum Zeitpunkt A1, während 160 ms vom ersten bis zum letzten Speicherplatz und beginnt dann ohne Unterbruch jeweils zu den Zeitpunkten A2, A3, A4 und A5 wiederum beim ersten Platz. Nach Beendigung der bei A5 beginnenden Ausspeicherung folgt eine mit 51 bezeichnete Pause von 200 ms, während welcher nur eingespeichert wird. Die nächste Ausspeicherung beginnt zum Zeitpunkt A1. Die Vorgänge im Speicher werden dabei von der Steuereinrichtung 43 gesteuert.

Das ausgespeicherte Signal ist somit gegenüber dem eingespeicherten zeitlich komprimiert und in Abständen von 1 s während 200 ms unterbrochen. In der Figur 4, obere Zeile, ist das eingespeicherte, in 1 s lange Hauptabschnitte 50 eingeteilte Signal dargestellt. Diese Hauptabschnitte sind je in fünf 200 ms lange Unterabschnitte eingeteilt. In der untern Zeile der Figur 4 ist das ausgespeicherte Signal dargestellt. Während eines Hauptabschnitts 50 weist dieses Signal eine Pause 51 und einen auf 800 ms verkürzten Hauptabschnitt 52, welcher aus fünf Unterabschnitten von je 160 ms Dauer besteht, auf.

Beim Speicher 21 liegen die Verhältnisse betreffend Ein- und Ausspeicher-Geschwindigkeit umgekehrt. Die zeitlichen Abläufe sind in Figur 6 dargestellt, wobei die gleichen Bezeichnungen verwendet werden wie in der Figur 5. Hier wird das Signal, welches in der untern Zeile von Figur 4 dargestellt ist, mit 10 kBits/s jeweils 800 ms lang eingespeichert. Mit der Einspeicherung beginnt auch die Ausspeicherung, welche mit 8 kBits/s durchgeführt wird und lückenlos aufeinander folgende Hauptabschnitte 50 mit je fünf 200 ms langen Unterabschnitten ergibt. Die Vorgänge im Speicher 21 werden dabei vom Taktgeber 18 gesteuert. Auf diese Weise gelingt es, das in das Mikrofon 9 gesprochene Signal ununterbrochen und mit der Originalfrequenz wiederzugeben, obwohl es auf der drahtlosen Uebertragungsstrecke komprimiert und zerstückelt ist.

Der zeitliche Ablauf der durch das Steuergerät 43 gesteuerten Ein- und Ausspeicherung im Speicher 35 wird dabei mit der durch den Taktgeber 18 gesteuerten Ein- und Ausspeicherung im Speicher 21 synchronisiert, indem das vom Taktgeber abgegebene Taktsignal auch den Erzeuger 17 des dem Sprachsignal unterlagerten Synchronisiersignals moduliert. Das Taktsignal wird demzufolge drahtlos nach den Unterstationen übertragen, in deren Auswertern 40 demoduliert und den Steuergeräten 43 zugeführt, wo es die genannte Synchronisierung bewirkt.

In den Pausen 51 werden gelegentlich Daten von den Unterstationen nach der Hauptstation übermittelt. Diese Daten sind in Figur 4 angedeutet. Es handelt sich um eine allgemein bekannte Kodierung mit 1200 Bits/s. Die in der Figur 4 dargestellten Impulse sind somit im Vergleich zu den Zeitabschnitten 51 und 52 nicht massstäblich dargestellt. Auf der drahtlosen Strecke werden diese Daten mittels Frequenzverschiebungs-Modulation (FSK) übertragen, was als allgemein bekannt angenommen werden darf. Die Daten werden in Paketen verschiedener Länge, die aber natürlich höchstens die Länge der Pausen 51 erreichen, übermittelt.

Zwischen der Hauptstation und den Unterstationen werden ebenfalls Daten übermittelt, deren Aufbau den beschriebenen Daten gleicht und die in der folgenden Abhandlung näher beschrieben werden.

In der Folge wird die Zusammenarbeit der verschiedenen Teile des gesamten Funksystems beschrieben.

Im Ruhezustand des Funksystems sind die Ein- und Ausspeichereinrichtungen 21 bzw. 35 der Hauptstation und der Unterstationen im Betrieb, verarbeiten jedoch keine Signale. Die Speichereinrichtung 21 der Hauptstation wird dabei durch den Taktgeber 18 und die Speichereinrichtung 35 jeder Unterstation durch das Steuergerät 43 gesteuert, wobei über den dauernd im Betrieb befindlichen Sender 13 der Hauptstation in der beschriebenen Weise die Steuereinrichtungen der Unterstationen mit dem Taktgeber der Hauptstation synchronisiert werden.

In den Unterstationen fallen in unregelmässigen Zeitabständen nach der Hauptstation zu übermittelnde Daten, insbesondere Standortmeldungen oder Verbindungsbegehren, an. Diese Daten werden je über die Eingänge 12 dem Daten-Zwischenspeicher 45 zugeführt und dort gespeichert. Das Vorliegen eines Speicherinhalts wird dem Tastungs-Steuergerät 43 der betreffenden Unterstation gemeldet. Während der nächsten durch den Taktgeber 18 bestimmten Periode, während welcher die Ein- und Ausspeichereinrichtungen 35 der Unterstationen in einer gegebenenfalls stattfindenden Abgabe von Sprachsignalen eine Pause eintreten lassen, gibt das Steuergerät 43 einen Befehl ab, die im Zwischenspeicher 45 gespeicherten Daten auszusenden. Damit wird der Zwischenspeicher 45 veranlasst, die Daten an den Schalter 37 abzugeben ohne sie jedoch zu löschen. Mit dem

gleichen Befehl wird der Schalter 37 derart umgelegt, dass die Daten an den Eingang des Senders 31 gelangen. Mit einem weitern Befehl des Steuergerätes 43 wird gleichzeitig der Sender getastet und der Antennenschalter 33 umgelegt. Die Daten werden vom Empfänger 14 der Hauptstation empfangen und dort dem Datenverarbeitungs-Gerät 6 zugeführt. Die Zufuhr an den Speicher 21 bleibt wirkungslos, da während dieser Zeitspanne nicht eingespeichert wird. Das Gerät 6 erzeugt ein Quittungssignal, in welchem ein aus den übermittelten Daten abgeleitetes Signal enthalten ist. Ausserdem wird von diesem Gerät der Schalter 15 umgelegt und damit das Quittungssignal dem Sender 13 zugeführt.

In der Unterstation wird das empfangene Quittungssignal dem Datenauswerter 42 zugeführt und dort mit dem aufgrund der ausgesendeten Daten erwarteten Quittungssignal verglichen. Sofern Uebereinstimmung festgestellt wird, werden die Daten im Zwischenspeicher 45 gelöscht.

Da die Daten bei allen Unterstationen gleichzeitig abgerufen werden ist es möglich, dass zwei Unterstationen gleichzeitig Daten nach der Hauptstation senden. Sofern sich dabei eine dieser Unterstationen wesentlich näher an der Hauptstation befindet als die andere, werden ausschliesslich die von dieser näheren Station abgegebenen Daten empfangen. Das Quittungssignal passt demnach nur bei dieser Unterstation mit den ausgesendeten Daten zusammen und bewirkt somit nur dort die Löschung der im Speicher 45 enthaltenen Daten. Bei der weiter entfernten Unterstation bleiben die Daten gespeichert, und es wird zu einem späteren Zeitpunkt ein zweites Mal versucht, die Daten zu übermitteln.

- 12 -

In Fällen, in denen an der Hauptstation beide Unterstationen ungefähr gleich stark empfangen werden, werden deren Signale beim Empfang derart vermischt und verstümmelt, dass von der Hauptstation kein Quittungssignal ausgesendet wird. Beide Unterstationen wiederholen daher die Aussendung ihrer Daten. Es sind in den Steuergeräten 43 Massnahmen getroffen um die zweite Aussendung der gleichen Daten bei den verschiedenen Unterstationen unterschiedlich zu verzögern, so dass eine Wiederholung des gleichzeitigen Aussendens der Daten verhindert ist.

Die beschriebene Uebermittlung von Daten spielt sich unabhängig von zwischen der Hauptstation und einer der Unterstationen geführten Gesprächen ab. Soll nun von der Hauptstation aus mit einer der Unterstationen ein Gesprächsverkehr aufgenommen werden, wird an der Tastatur des Datenverarbeitungs-Gerätes 6 der Hauptstation das Kennzeichen der gewünschten Unterstation eingegeben, worauf das Gerät 6 den Schalter 15 betätigt und ein entsprechendes Rufzeichen, welches die gleiche Form wie die von den Unterstationen nach der Hauptstation übermittelten Daten und das Quittungssignal aufweist, wird über den Sender 13 ausgesendet. Bei der angerufenen Unterstation wird das Rufsignal in diesem Auswerter 42 erkannt, und das Anrufgerät 44 wird veranlasst, einen Rufton zu erzeugen und den Schalter 41 umzulegen, worauf der Rufton dem Lautsprecher 10 zugeleitet wird.

An der angerufenen Station wird der Lautsprecher-Schalter 46 betätigt, worauf der Lautsprecher über das Hochpass-Filter 39 und die Schalter 46 und 41 an den Ausgang des Empfängers 32 angeschlossen ist. Wird nun, um den Anruf zu beantworten, die Sprechtaste 11 betätigt, gibt das Tastungs-Steuergerät 43 einen Tastbefehl an den Sender 31 und an den Antennen-Umschalter 33

BAD ORIGINAL

ab. Dieser Taktbefehl wird jedoch, wie bereits erwähnt, in Abständen von 1 s jeweils während 200 ms unterbrochen und während dieses Unterbruchs werden, sofern zu übermittelnde Daten vorliegen, diese Daten gesendet. Der Unterbruch ermöglicht der Hauptstation, während der Zeit des Gesprächs auch Daten von andern Unterstationen zu empfangen.

Wie vorher beschrieben, wird dabei ein Verlust von Teilen des Sprachsignals vermieden, indem das vom Mikrofon 9 kommende Sprachsignal komprimiert, in komprimierter Form als Analogsignal übermittelt und in der Hauptstation wiederum expandiert wird. Sofern das Ein- und Ausspeichern in den verschiedenen Stationen richtig aufeinander abgestimmt ist, was durch die drahtlose Uebertragung des Synchronisiersignals ermöglicht wird, findet trotz der Unterbrechungen des Sprachsignals auf der drahtlosen Strecke eine ununterbrochene Uebertragung von Sprache zwischen den Unterstationen und der Hauptstation statt.

Bei der beschriebenen, eine Kompression und Expansion umfassenden Uebertragungsart wird das Sprachsignal, sofern nur der Anfang und das Ende der Uebertragungskette betrachtet werden, nur in bezug auf die obere Grenzfrequenz beeinträchtigt, indem die Grenzfrequenz des zwischen Mikrofon und Lautsprecher übertragenen Signals im Verhältnis der Kompression gegenüber der Grenzfrequenz auf dem Uebertragungsweg herabgesetzt ist.

Dank den beschriebenen Einrichtungen können von einer Unterstation Sprachsignale gleichzeitig mit einer beträchtlichen Menge von Daten, die von der gleichen oder von einer beliebigen andern Unterstation abgegeben werden nach der Hauptstation übermittelt werden. Dabei ist es nicht möglich, dass eine nahe an der Hauptstation befindliche Unterstation durch

- 14 -

dauerndes Senden eines Sprachsignals einer weiter von der Hauptstation entfernten Unterstation verunmöglicht, an der Hauptstation empfangen zu werden.

Bei der Uebertragung von Daten in der Verkehrsrichtung von der Hauptstation nach den Unterstationen wird die Uebertragung der übrigen Signale unterbrochen ohne dass Massnahmen zur Kompensation der herausgeschnittenen Teile getroffen sind. Die in Frage stehenden Daten sind das Anrufsignal und das Quittungssignal. Das Anrufsignal wird nur ausserhalb eines Gesprächs ausgesendet und beeinträchtigt daher das Sprachsignal nicht. Das Quittungssignal macht sich dagegen in einem Gespräch, welches gegebenenfalls während der Erzeugung des Quittungssignals im Gange ist, störend bemerkbar. Da es aber - im Gegensatz zu den in der Gegenrichtung übertragenen Daten - wesentlich kürzer ist und nicht regelmässig erzeugt wird, ist die Störung derart, dass sie die Verständlichkeit nicht wesentlich beeinträchtigt. Es wäre natürlich mit einem entsprechenden Mehraufwand grundsätzlich auch möglich, für das Quittungssignal einen bestimmten Zeitpunkt innerhalb jeder Periode des Synchronisiersignals festzusetzen und die von der Hauptstation nach den Unterstationen gerichteten Sprachsignale in gleicher Weise zu komprimieren und zu expandieren wie dies in der Gegenrichtung geschieht.

Die Erfindung ist natürlich nicht an das Ausführungsbeispiel gebunden. Insbesondere die Länge der Abschnitte des Sprachsignals und der Unterbrüche können innerhalb weiter Grenzen festgelegt werden, und die die Kompression und Expansion ermöglichenden Speicher können auch eine grössere als die im Ausführungsbeispiel angenommene minimale Kapazität aufweisen. Die Kompression und Expansion eines analogen Signals könnte grundsätzlich auch anders, z.B. mit Hilfe eines analogen

- 16 -

Schieberegisters, erfolgen. Die Erfindung ist auch nicht an die Uebertragung eines komprimierten Analogsignals gebunden; es könnte auch ein komprimiertes Impuls-Modulations-Signal übertragen werden. Auch in der Art der Datenübertragung ist die Erfindung nicht an das Ausführungsbeispiel gebunden. Eine solche Uebertragung könnte auch mit Tonfrequenzen erfolgen.

Die Erfindung ist auch nicht an einen Halb-Duplex-Betrieb gebunden. Sofern in den Unterstationen anstelle von Antennenumschaltern geeignete Filter angebracht werden, kann auch mit Voll-Duplex-Betrieb verkehrt werden.

Sofern die Zeitschlitze kurz gemacht werden und zeitlich nicht besonders nahe beieinanderliegen, was beim Vorliegen kleiner zu übertragender Datenmengen möglich ist, und sofern nur kleine Ansprüche an die Uebertragungsqualität gestellt werden, ist auch ein Verzicht auf Kompression und Expansion des Sprachsignals möglich.

Die Uebertragung des Synchronisiersignals von der Hauptstation nach den Unterstationen muss nicht in einem unterhalb des Sprachbandes liegenden Frequenzbereich erfolgen; es wäre grundsätzlich auch eine Uebermittlung in einem über dem Sprachbereich liegenden Frequenzbereich möglich.

Die Erfindung ist auch nicht an ein Funksystem mit einer einzigen Hauptstation gebunden. Es können mehrere Hauptstationen angeordnet werden, die verschiedene oder gleiche Trägerfrequenzen aussenden und denen das gleiche Signal (einschliesslich Synchronisiersignal) aufmoduliert ist. In den Unterstationen sind dabei Massnahmen zu treffen, welche jeweils den Empfang der bestmöglich zu empfangenden Hauptstation

BAD ORIGINAL

0156765

BAD ORIGINAL

- 17 -

gewährleisten, und bei den Hauptstationen muss dafür gesorgt sein, dass nur diejenige Hauptstation das empfangene Signal weiterleitet, an welcher es am besten empfangen wird.

– 1 –

Patentansprüche

1.  Funksystem für Halb- oder Voll-Duplex-Betrieb, mit mindestens einer Hauptstation (1) und mehreren zwecks Uebermittlung von Sprachsignalen von Hand auf Senden steuerbaren (zu tastenden) Unterstationen (7a...7c), zur Uebermittlung von Datensignalen (12, 6) von den Unterstationen (7a...7c) nach der Hauptstation (1) und zur unabhängig davon und damit gegebenenfalls gleichzeitig erfolgenden Uebermittlung von Sprachsignalen von einer der Unterstationen (7a) nach der Hauptstation (1) und von der Hauptstation nach der betreffenden Unterstation (7a), gekennzeichnet durch in der Hauptstation vorhandene erste Schaltungsmittel (18, 17), welche die Hauptstation (13) dauernd zur Aussendung eines ausserhalb des Sprachbandes liegenden Synchronisiersignals veranlassen, durch je in den Unterstationen vorhandene zweite Schaltungsmittel (43), welche einen gegebenenfalls von Hand abgegebenen Tastungsbefehl (11) in Abständen einer ersten Periode (50) während einer zweiten Periode (51) aufheben, durch je in den Unterstationen vorhandene dritte Schaltungsmittel (43, 45), welche, sofern zu übermittelnde Daten (12) vorliegen, während einer der genannten zweiten Perioden (51), unabhängig von einem gegebenenfalls an der betreffenden Station von Hand abgegebenen Tastbefehl (11), die Aussendung dieser Daten (12) veranlassen und durch je in den Unterstationen

BAD ORIGINAL

- 2 -

vorhandene vierte Schaltungsmittel (40), welche mit Hilfe des empfangenen Synchronisiersignals die zweiten und die dritten Schaltungsmittel sämtlicher Unterstationen untereinander synchronisieren.

2. Funksystem nach Patentanspruch 1, gekennzeichnet durch je den Unterstationen zugeordnete Schaltungsmittel (34, 35,36), welche je aus einem während einer der genannten ersten Perioden (50) nach der Hauptstation zu übertragenden Sprachsignal (9) während einer ausserhalb von zweiten Perioden liegenden Zeit ein auf eine der Differenz der beiden genannten Perioden (50, 51) entsprechende Zeit komprimiertes analoges Sprachsignal (52) erzeugen und durch der Hauptstation zugeordnete, mit den Schaltungsmitteln der Unterstationen synchronisierte Mittel (20,21, 22), welche aus dem genannten komprimierten Signal (52) wiederum ein die Dauer der genannten ersten Periode (50) aufweisendes analoges Signal herstellen.

3. Funksystem nach Patentanspruch 2, dadurch gekennzeichnet, dass die das Analogsignal komprimierenden Mittel (34,35,36) das Signal mit einer mindestens der doppelten der höchsten zu übertragenden Frequenz entsprechenden Frequenz abtasten, die einzelnen Abtastwerte in binäre, parallel kodierte Werte umwandeln (34), dieses binäre Signal ununterbrochen in einen Speicher (35) mit einer der genannten zweiten Periode (51) entsprechenden Kapazität einspeichern und dabei nach Belegung der letzten Speicherplätze wiederum mit der Einspeicherung auf den ersten Plätzen beginnen, die ferner dieses binäre Signal mit einer dem komprimierten Signal (52) entsprechenden Geschwindigkeit, unterbrochen von Pausen (51) in

- 3 -

einer der Einspeicherung entsprechenden Weise wiederum ausspeichern und in ein analoges Signal zurückverwandeln (36).

4. Funksystem nach Patentansprüchen 2 und 3, dadurch gekennzeichnet, dass die das komprimierte Analogsignal (52) expandierenden Mittel (20,21,22) in gleicher Weise wie die komprimierenden Mittel (34,35,36) eine vorübergehende Umwandlung des Signals in ein binär parallel-kodiertes Signal und eine Zwischenspeicherung (21) dieses binären Signals vornehmen.

5. Funksystem nach Patentanspruch 1, dadurch gekennzeichnet, dass das Synchronisiersignal mit Hilfe eines dem Sprachsignal unterlagerten, durch Frequenzverschiebung modulierten Signals übertragen wird.

Fig.1

50    50

Fig.4

51    52    51    52

Fig.5

E1    E2,A1    A2,E3    A3 E4 A4    E5 A5    E1    E2,A1

← 51 →    ← 51 →

Fig.6

A5    E1,A1    E2 A2    E3 A3 E4    A4 E5    A5    E1,A1

← 51 →    ← 51 →

2/2

0156765

Fig. 2

Fig. 3

Europäisches
Patentamt

**EUROPÄISCHER RECHERCHENBERICHT**

**0156765**
Nummer der Anmeldung

EP 85 81 0060

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.4) |
|---|---|---|---|
| Y | EP-A-0 037 071 (SIEMENS) * Seite 1, Abschnitt 1; Seite 2, Zeile 23 - Seite 3, Zeile 17; Seite 4, Zeile 9 - Seite 5, Zeile 14; Seite 6, Zeilen 9-21 * | 1 | H 04 B 7/26 H 04 B 1/66 |
| A | | 2 | |
| | --- | | |
| Y | US-A-4 112 257 (FROST) * Spalte 3, Zeilen 12-13, Zeilen 36-40 und Zeile 54 - Spalte 4, Zeile 18 * | 1 | |
| A | | 5 | |
| | --- | | |
| A | EP-A-0 013 341 (IBM) * Seite 5, Zeile 15 - Seite 6, Zeile 23 * | 2,3 | RECHERCHIERTE SACHGEBIETE (Int. Cl.4) |
| | ----- | | H 04 B H 04 J H 04 M H 04 Q |

Der vorliegende Recherchenbericht wurde für alle Patentansprüche erstellt

| Recherchenort DEN HAAG | Abschlußdatum der Recherche 10-06-1985 | Prüfer HOLPER G.E.E. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82